Europäisches Patentamt

European Patent Office

Office européen des brevets

(11) Publication number: **0 088 576**

**B1**

(12) **EUROPEAN PATENT SPECIFICATION**

(45) Date of publication of patent specification: **28.05.86**

(51) Int. Cl.⁴: **B 21 D 7/12,** B 21 D 11/10

(21) Application number: **83301076.2**

(22) Date of filing: **01.03.83**

(54) Methods and apparatus for manufacturing cutting tools.

(30) Priority: **04.03.82 GB 8206355**

(43) Date of publication of application:
**14.09.83 Bulletin 83/37**

(45) Publication of the grant of the patent:
**28.05.86 Bulletin 86/22**

(84) Designated Contracting States:
**AT BE DE FR GB IT LU NL SE**

(56) References cited:
**EP-A-0 032 656**
**DE-A-1 552 891**
**DE-A-1 920 670**
**DE-A-2 613 264**
**DE-A-2 712 843**
**DE-C- 845 893**

(73) Proprietor: **BUSM Co. Limited**
**P.O. Box 88 Ross Walk Belgrave**
**Leicester LE4 5BX (GB)**
(84) **GB**

(73) Proprietor: **USM Corporation**
**426 Colt Highway**
**Farmington Connecticut 06032 (US)**
(84) **BE DE FR IT LU NL SE AT**

(72) Inventor: **Archer, John Richard**
**78 Chapel Lane**
**Fowlmer Royston Hertfordshire (GB)**
Inventor: **Ross, Peter Fraser**
**29 Illingworth Way**
**Foxton Cambridgeshire (GB)**

(74) Representative: **Atkinson, Eric et al**
**Emhart Patents Department P.O. Box 88 Ross Walk**
**Belgrave Leicester LE4 5BX (GB)**

Courier Press, Leamington Spa, England.

## Description

This invention is concerned with methods of and apparatus for manufacturing cutting tools for cutting out areas of sheet material, e.g. leather, as a preliminary stage to a manufacturing process. More particularly, the invention is concerned with the manufacture of press knives for cutting out leather blanks from which boots and shoes can subsequently be made.

One present method of manufacturing press knives employs a V-block which co-operates with a complimentarily shaped abutment. In use, a metal strip is fed progressively by an operator between the block and abutment and is bent locally under the control of the operator, who, usually by means of a foot treadle, can effect advancing movement between the block and abutment for the purpose of effecting such local bending. For guidance purposes, usually a card template is used against which the operator can check each bend in the metal strip. This is disadvantageous since the shoe manufacturer will rarely require more than one knife of any given style and size, so that the provision of card templates is uneconomic, and further in that, because fashion changes demand a regular flow of knives with new profiles, there is a constant requirement for new card templates to be provided.

For providing in the metal strip curved portions of desired shape, furthermore, the skill of the operator is relied upon heavily, since the V-block and abutment arrangement is capable of producing only corners between otherwise straight portions of the strip. The skill of the operator is thus utilised in his creating a number of closely spaced local bends along the strip, the spacing and the angle of such bends being such as to produce a curved portion of desired shape. In addition, because the strip has a springback characteristic, which means that the strip has always to be bent through a greater angle than is actually required to allow for springback due to the resilience of the material, the skill of the operator is again required in order to ensure than the correct shape is achieved. The profile tolerance achievable with such a method is typically plus or minus 0.4 mm and a knife for a piece such as a shoe quarter will require approximately 60 discrete bends.

It will be appreciated that the bending of strips by such a method is thus time-consuming and requires a great deal of skill and experience on the part of the operator.

A further disadvantage of the V-block method of strip bending resides in that, because the abutment engages the strip at opposite sides of the block, bending effectively takes place about the point of engagement between the block and the strip at both sides. This does not present a significant problem to an experienced operator exercising visual control, but in fact the effect is that there is no clearly defined fixed datum along the strip from which the angle of bend achieved can readily be measured. Furthermore, where bends have to be made in opposite directions along the axis of a length of strip, it is necessary, using the V-block approach, to remove the strip from between the block and abutment and turn it round; this is of course again time-consuming, and in addition it can only reasonably be practised where the bending operation is a manual process. Thus, in considering the automation of the strip bending process the use of a V-block does not recommend itself.

In other fields of art, e.g. pipe bending or tube bending, it has been proposed (see e.g. DE—A—2613264) to provide a computer-controlled machine by which bends can be formed in the stock (rod or tube) to be formed. Thus, the apparatus of DE—A—2613264 includes a forming tool (snout) which is slotted to allow the stock to be advanced to a projecting position at the snout outlet, together with a bending tool (pin) which can rotate transversely of the outlet, spaced therefrom, through a controlled amount so as to engage the projecting end of the stock and bend it through an appropriate amount. For enabling the pin to be used for bending the stock in either direction, furthermore, the pin is retractable below the plane of the stock, and its direction of movement is also programme-controlled. Conventionally, the stock is malleable and thus does not exhibit the springback characteristic of knife steel, so that the movement of the pin need not be correlated to take account of any such springback characteristic.

In an apparatus of this type, furthermore, the pin is utilised to control only the degree of bending, the radius of bend being determined by appropriately radiussed surfaces adjacent the snout outlet, about which surfaces the stock is bent. Thus, if a different radius is required, then a new snout must be provided with the appropriately radiussed surfaces.

In the case of the manufacture of press knives, however, there is little or no uniformity of radius of any of the curved portions, so that consequently the practices followed in tube bending and rod bending are not applicable to the bending of metal strip for press knife manufacture.

In the manufacture of press knives, furthermore, it is sometimes desirable to provide a support plate of suitable material, e.g. mild steel, which is fitted within the knife profile when formed and is secured by welding or brazing or other bonding technique. Conventionally, the profile of such a support plate is determined after the knife has been made, utilising the completed knife, although alternatively it could also be made from the card template. Whichever method is used, the manufacture of the support plate represents a further operation requiring operator time and effort and generally reduces the productivity of the operator.

It is one of the various objects of the present inventon to provide an improved method of manufacturing press knives, which method is carried out under automatic control and which, if desired, may also provide appropriately shaped support plates for reinforcing the knives, but without the prior provision of any card template.

It is a further object of the present invention to provide an improved apparatus the operation of which is under automatic control, and in the operation of which the curvature of any portion of the metal strip does not rely upon the radius of the forming tool.

The invention thus provides, in one of its aspects, apparatus for bending material in strip form for use in the manufacture of press knives comprising a bending station having a work table, means for advancing a strip of material to said bending station, guide means for guiding the strip thus advanced, said guide means terminating at the bending station in a snout beyond which the material to be bent projects, and a bending tool located at the bending station and cooperable with the snout for bending the projecting strip material, said bending tool comprising a pin which is mounted for movement transversely of the guide means and also heightwise between a projecting position, in which it projects above the surface of the work table, and a retracted position, in which it does not so project, whereby the pin can be located at either side of the strip material projecting from the snout and also can be moved against such strip material to bend it about a bending edge provided by the snout, wherein the snout outlet defines a point about which each increment of bending takes place, the arrangement being such that the radius of a curve formed in the strip is determined by the magnitude of longitudinal feed of the strip between successive bending operations and the magnitude of the transverse movement of the bending tool in such bending operations, and wherein computer control means is provided for controlling the increments of advancing movement effected by the advancing means, the position of the pin in relation to the snout prior to a bend being made, and the amount and the direction of transverse movement of the bending pin in accordance with data supplied to the control means and relating to the shape to which the strip material is to be bent.

It will thus be appreciated that, by providing the snout outlet with a point (or line) contact only with the strip, the outlet itself no longer provides a radius determining the radius of bend, but rather enables the forming of the strip to take place with any desired curvature according to the pattern of die to be achieved. Furthermore, the line contact provides a datum from which the angle can be measured, thereby allowing for control of the bending to take place in a simple and effective manner under computer control. Thus, where a corner is required of a given angle, the strip can readily be bent about the line contact with the snout outlet, the magnitude of movement of the bending pin determining the angle of bend, while, where a curved portion is desired, the computer control means effects a succession of bending and feeding operations such as to achieve the desired curvature automatically. In this way the bending operation, which previously was subject to a need for great skill and experience on the part of the operator, is now rendered fully automatic.

For co-operating with the snout outlet, furthermore, preferably the pin which constitutes the bending tool has an enlarged head, the arrangement being such that, where the pin projects above the surface of the work table, an edge portion of the enlarged head thereof contacts the strip at a point substantially halfway up the height of such strip. In this way, it has been found that distortion of the strip material is reduced as compared with a full line contact between the bending tool and the strip.

The means for advancing a strip of material may comprise a pair of rollers, rotation of which is servo-controlled. Such an arrangement is relatively compact, but assumes that no slippage or creep can occur between the strips of material and the roller surfaces. Any such slippage or creepage would of course cause a reduction in profile accuracy. Alternatively, a linear actuator may be used, again under positional servo-control. Such an arrangement would conveniently comprise first and second clamps actuatable alternately for feeding the strip material and for thereafter clamping it in position during the retraction of the strip material advancing means. In such an arrangement, a long length of strip material could be progressively fed through using a relatively short actuator stroke.

The pin constituting the bending tool is preferably mounted on a rotatable support located below the level of the snout outlet, the pin being retractably mounted in said support for movement between its projecting and retracted positions. Conveniently the surface of the support lies flush with the surface of the work table. For rotating the support, and thus the pin, conveniently a semi-rotary vane type actuator is used. Such an actuator can provide up to 280° of rotation, i.e. ± 140° from the centre line of the machine, and this is adequate for all but the most acute bends. For monitoring the operation of the linear actuator and the vane-type actuator, preferably positional transducers are provided; these may be either digital (e.g. optical) or analogue (e.g. potentiometric or inductive). Conveniently, all such sensitive and readily damaged components are mounted beneath the work table for protection.

For certain bends of acute angle, it may be desirable to broach the strip material in order to prevent cracking, and to this end the apparatus preferably also comprises a broaching head, located "upstream" of the snout. Similarly, said apparatus may also comprise means for severing a length of strip material from the stock after the strip has been formed. Such means may comprise a high speed edge cutter which is located adjacent the snout. Conveniently, the cutter would be lowered from above the snout.

For handling the completed knife blade after cutting, conveyor means may be provided, e.g. in the form of a transfer bar which moves the completed knife blade across the work table to an exit chute or collection point.

The invention further provides, in another of its aspects, a method of manufacturing press knives comprising the steps of generating data relating to the profile of a sheet material blank which is to be cut out using a press knife, converting the data into machine instructions, supplying such instructions to a bending machine, supplying strip material to the bending machine, forming from the strip material thus supplied two or more lengths which together, when formed, will provide the complete profile of the knife, such forming taking place in accordance with said instructions and comprising the steps of advancing the strip material through a bending station of said machine, bending it at said station and cutting off said lengths thereof, supplying instructions converted from said data also to a cutting or milling machine, cutting or milling a support plate for the press knife from sheet material using such machine in accordance with said instructions, and assembling said lengths of formed strip material around said support plate and securing said lengths and said support plate together in the desired configuration.

In this way, both the bending of the strip material and the manufacture of the support plate are effected automatically from data provided, without the intervention of an operator, who then merely has to carry out the assembly operation.

Conveniently in carrying out said method, said data is converted into a plurality of channels of machine instructions, one of which channels is supplied to the bending machine and one to the cutting or milling machine. Furthermore, a further one of said channels may be supplied to an assembly station at which said lengths of formed strip material and said support plate are assembled and secured as aforesaid.

The support plate may conveniently include one or more large apertures to assist in removal of cut sheet material from the knife when in use, and such apertures may also serve as location datums for manufacture. Furthermore, where pins or so-called prickers are required, holes into which they are to be secured may be machined at the same time as the apertures are cut, for subsequent mounting of the pins or prickers.

The cutting of the support plate may be performed by any suitable technique, e.g. flame cutting, plasma cutting, nibbling, laser cutting or profile milling.

In carrying out the method in accordance with the invention, it is desirable that the individual lengths of strip material be marked to avoid confusion, particularly when a set of knives is being produced consecutively. Conveniently, therefore, a pre-set number or a sequential number is applied to the strip material by a punching machine. Similarly the appropriate support plate should be identified to indicate its association with particular plate components.

In one arrangement, for example, all the parts of a knife may be marked with a two digit number which will automatically be incremented by one for each new set of knife parts. An operator assembling knives from the parts can then readily observe which parts are related. After, say, one hundred knives have been manufactured, the counter will conveniently be re-set to zero and the sequence can then be repeated.

Instead of a punching machine, a thermal printer could be connected to the bending machine controller to produce a set of labels, e.g. self-adhesive labels, together with a knife description and, if necessary, a profile image which, prior to assembly, can be attached to the blade set which can then be bagged or boxed.

In the manufacture of knives as currently practised, conventionally knives carry three sets of marks, viz. a) a reference mark in the side of the blade indicating size and pattern number, b) size marks in the blade edge to mark the cut leather, and c) a colour size mark on the knife face to assist the operator in selecting the correct knife. Each of these markings serves a particular function and conveniently provides for a similar set of identification marks to be applied to knives manufactured by a method in accordance with the present invention. The identification marks may, for example, be inserted in the blade edge "upstream" of the bending station.

There now follows a detailed description, to be read with reference to the accompanying drawings, of one apparatus and one method in accordance with the invention, which apparatus and method have been selected for description to illustrate the invention by way of non-limiting example.

In the accompanying drawings:—

Figure 1 is a data flow path of a system for forming a press knife, as used by apparatus described;

Figure 2 is a plan view from above of a bending station of the apparatus;

Figure 3 is a partial cross-section through a bending head at the bending station; and

Figure 4 is a perspective view of the apparatus.

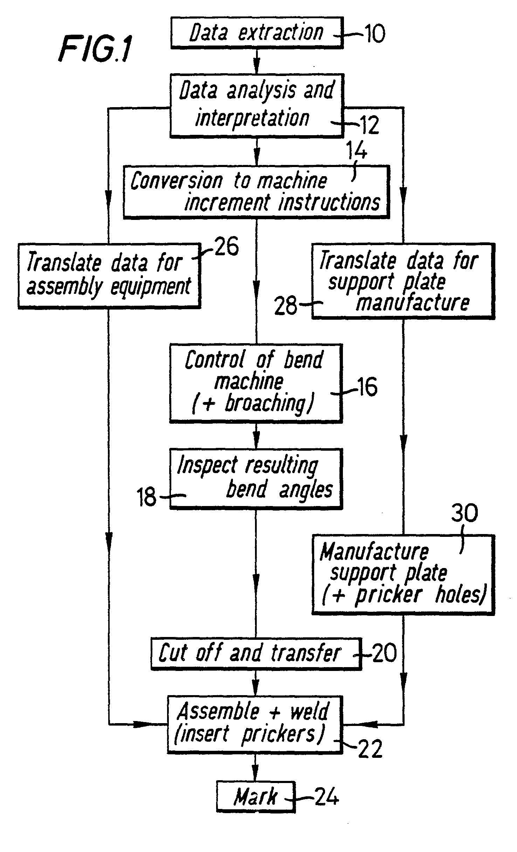

In Figure 1, the data flow path is shown as comprising extraction of data from a computer system at 10 and the analysis and interpretation of the data at 12 to provide three channels of information.

The main channel includes a stage 14 for converting the analysed data to machine increment instructions. Thereafter these instructions are supplied at 16 to the control of a bending machine with or without broaching.

Where automated inspection of the bending process is provided for, this will occur at 18. After all of the bends have been formed, the bent knife blade parts are cut off at 20 and transferred to an assembly station at 22 where parts of the knife blade are welded together, thereafter the blade is marked at 24.

Information from the analysis and interpretation stage 12 is also passed by the left-hand channel through a data translation stage 26 to provide information for assembling the parts which go to make up the completed knife blade and this information is supplied as a further input to the assembly stage 22. Lastly, the data from the stage 12 is provided via a data translation stage 28 to provide information from which the support plate can be manufactured. This information is supplied to a support plate manufacturing stage 30 which includes a cutter or like device for removing material from the plate in a correct shape and to a correct size. Holes are formed in the support plate to receive the so-called prickers. The support plates from the manufacturing stage 30 are then supplied as a further input to the assembly stage 22.

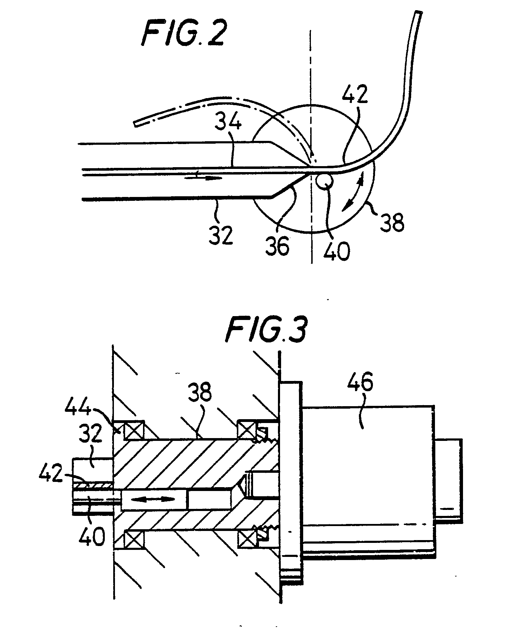

Figure 2 shows somewhat diagrammatically how the strip material can be bent to form the different curves and bends of the knife blade profile. To this end a strip guide 32 serves to constrain a length of strip metal material 34 to move longitudinally along a generally straight path and through the outlet of a snout generally designated 36.

Below the snout 36 is located a bending head spindle 38 which is rotatable or angularly deflectable from a mean position so that an upstanding pin 40 can exert lateral force on the strip material protruding through the snout as at 42, so as to form a bend.

The bending pin 40 is retractable fully into the rotatable spindle 38 so that the latter can be rotated so as to position the bending pin 40 on the opposite side of the strip 42.

Figure 3 shows in cross-section how the bending pin 40 protrudes from the spindle 38. The spindle 38 is a cylindrical member having an enlarged radial flange 44 at one end and an aperture through which the pin 40 can protrude.

A hydraulic semi-rotary actuator 46 rotates the spindle 38 to the desired angular position for engagement with one side or the other of the protruding strip material to bend the latter.

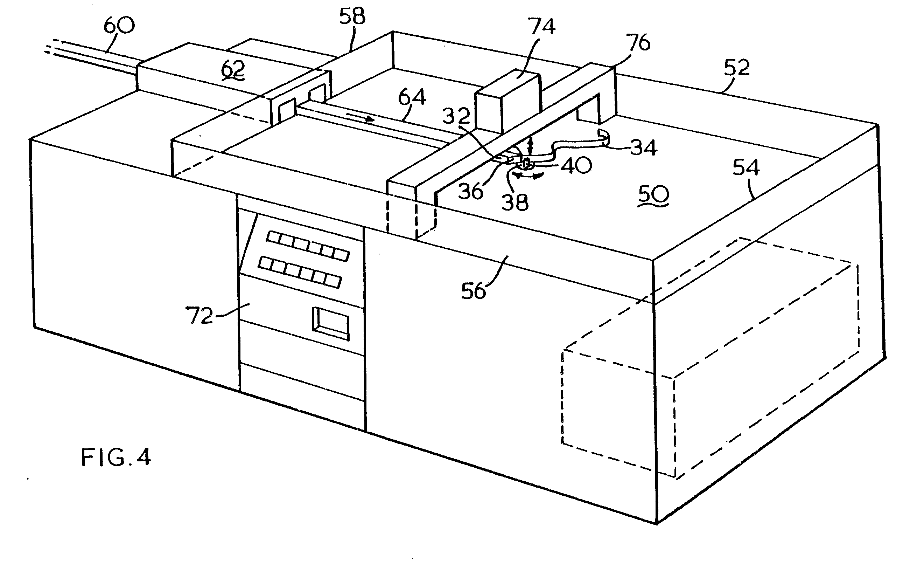

Figure 4 shows the layout of the incremental bending machine for producing press knife blades.

The bending station has a flat table 50 having a guard on four sides at 52, 54, 56 and 58. The table provides a support for a metal strip, part of which can be seen at 70 after it has been bent. Before being bent the strip material is relatively straight as at 60. The blade material passes through an actuator 62 for incrementally advancing the material, which is then supplied via the guide 32 to the outlet snout 36. The pin 40 is spaced from the snout 36 and engages the strip projecting beyond the snout 36.

The signals for the incremental feed actuator 62 and the bending head spindle 38 are derived from a computer, the control panel for which is denoted by reference numeral 72.

The completed blades are severed from the stock strip material by means of a cutting tool (not shown) mounted (together with a cutter tool actuator 74) on a bridge 76 which extends across the width of the platform or table 50.

Conveniently the bridge is moveable so as to allow for a selection of the position at which the cutting tool will operate.

Although the pin 40 is shown cylindrical in the drawings, it preferably has an enlarged head at its upper end, the head being barrelled so that it makes point contact with the strip substantially halfway up the height of the latter.

The described machine performs incremental bending, each bend being imparted by bending the strip about the outlet of the snout 36, this outlet being aligned with the pivot axis of the spindle 38.

The snout outlet defines the point about which each increment of bending takes place, but the snout does not limit the amplitude of bend and does not act as a former around which bending takes place. The shape of the complete bend is determined by the magnitudies of the longitudinal advances and the magnitudes of the angular deflections, not by the shape of any former or mandrel.

It is preferred for the data relating to the profile of a knife to be formed to be generated and processed in a "main" computer, and to provide a smaller dedicated computer, such as a microcomputer, for controlling the bending machine. The microcomputer then issues the bending instructions in length and angle coordinates, the lengths representing the incremental advances of the strip material and then angles the incremental bends applied by the pin 40. The two computers may be directly linked, but a magnetic storage medium is preferred as this enables the design and bending systems to be run independently.

**Claims**

1. Apparatus for bending material in strip form for use in the manufacture of press knives comprising:

a bending station having a work table (50),

means (62) for advancing a strip of material to said bending station,

guide means (32) for guiding the strip thus advanced, said guide means (32) terminating at the bending station in a snout (36) beyond which the material to be bent projects, and

a bending tool (40) located at the bending station and cooperable with the snout (36) for bending the projecting strip material, said bending tool (40) comprising a pin (40) which is mounted for movement transversely of the guide means (32) and also heightwise between a projecting position, in which it projects above the surface of the work table (50), and a retracted position, in which it does not so project, whereby the pin (40) can be located at either side of the strip material projecting from the snout (36) and also can be moved against such strip material to bend it about a bending edge provided by the snout (36),

wherein the snout (36) outlet defines a point about which each increment of bending takes place, the arrangement being such that the radius of a curve formed in the strip is determined by the magnitude of longitudinal feed of the strip between successive bending operations and the magnitude of the transverse movement of the bending tool (40) in such bending operations, and wherein computer control means (10—30) is provided for controlling the increments of advancing movement effected by the advancing means (62), the position of the pin (40) in relation to the snout (36) prior to a bend being made, and the amount and the direction of transverse movement of the bending pin (40) in accordance with data supplied to the control means (10—30) and relating to the shape to which the strip material is to be bent.

2. Apparatus according to Claim 1 wherein the bending pin (40) has an enlarged head, the arrangement being such that, where the pin (40) projects above the surface of the work table (50), an edge portion of the enlarged head thereof contacts the strip at a point substantially halfway up the height of such strip.

3. Method of manufacturing press knives comprising the steps of:

generating data relating to the profile of a sheet material blank which is to be cut out using a press knife,

converting the data into machine instructions,

supplying such instructions to a bending machine,

supplying strip material to the bending machine,

forming from the strip material thus supplied two or more lengths which together, when formed, will provide the complete profile of the knife, such forming taking place in accordance with said instructions and comprising the steps of advancing the strip material through a bending station of said machine, bending it at said station and cutting off said lengths thereof,

supplying instructions converted from said data also to a cutting or milling machine,

cutting or milling a support plate for the press knife from sheet material using such machine in accordance with said instructions, and

assembling said lengths of formed strip material around said support plate and securing said lengths and said support plate together in the desired configuration.

4. Method according to Claim 3 comprising also the step of mounting so-called prickers in the support plate.

5. Method according to either one of Claims 3 and 4 wherein said data is converted into a plurality of channels of machine instructions, one of which channels is supplied to the bending machine and one to the cutting or milling machine.

6. Method according to Claim 5 wherein a further one of said channels is supplied to an assebly station at which said lengths of formed strip material and said support plate are assembled and secured as aforesaid.

**Patentansprüche**

1. Vorrichtung zum Biegen von Material in Streifenform zur Verwendung bei der Herstellung von Schnittwerkzeugen, mit einer einen Arbeitstisch (50) aufweisenden Biegestaton, einer Einrichtung (62) zum Bewegen eines Materialstreifens zu der Biegestation, einer Führungseinrichtung (32), welche den so bewegten Streifen führt und an der Biegestation in einer Schnauze (36) endet, jenseits welcher das zu biegende Material abragt, und mit einem an der Biegestation angeordneten und mit der Schnauze (36) zwecks Biegens des abragenden Materialstreifens zusammenwirkenden Biegewerkzeug, welches einen Stift (40) aufweist, der zwecks Bewegung quer zur Führungseinrichtung (32) und in der Höhe zwischen einer Position, in welcher er oberhalb der Oberfläche des Arbeitstisches (50) vorsteht, und einer zurückgezogenen Positon angeordnet ist, so daß der Stift (40) an jeder Seite des von der Schnauze (36) abragenden Materialstreifens angeordnet und gegen diesen Materialstreifen bewegt werden kann, um ihn um einen von der Schnauze (36) geschaffenen Biegerand zu biegen, wobei der Auslaß der Schnauze (36) einen Punkt definiert, um welchen jede Biegestufe erfolgt, wobei die Anordnung so getroffen ist, daß der Radius einer im Streifen gebildeten Krümmung von der Größe der longitudinalen Zuführung des Streifens zwischen aufeinanderfolgenden Biegevorgängen und dem Betrag der transversalen Bewegung des Biegewerkzeuges (40) bei derartigen Biegevorgängen bestimmt ist, wobei eine Computersteuereinrichtung (10—30) zum Steuern der von der Einrichtung (62) bewirkten Voreilbewegungsstufen, der Position des Stiftes (40) in Bezug auf die Schnauze (36), bevor ein Abbiegen erfolgt, und der Größe und der Richtung der transversalen Bewegung des Stiftes (40) in Übereinstimmung mit Daten vorgesehen ist, welche der Steuereinrichtung (10—30) zugeführt sind, und welche sich auf die Form beziehen, in welche der Materialstreifgen zu biegen ist.

2. Vorrichtung nach Anspruch 1, dadurch gekennzeichnet, daß der Stift (40) einen vergrößerten Kopf aufweist und die Anordnung derart ist, daß, wenn der Stift (40) oberhalb der Fläche des Arbeitstisches hervorsteht, ein Randabschnitt des vergrößerten Kopfes den Streifen in einem Punkt berührt, der im wesentlichen auf der halben Höhe dieses Streifens liegt.

3. Verfahren zum Herstellen von Schnittwerkzeugen, wobei sich auf das Profil eines unter Verwendung eines Preßmessers auszuschneidenden Blechmaterial-Rohteiles beziehende Daten erzeugt werden, die Daten in Maschineninstruktionen umgewandelt werden, diese Instruktionen zu einer Biegemaschine gegeben werden, ein Streifenmaterial der Biegemaschine zugeführt wird, aus dem so zugeführten Streifenmaterial zwei oder mehere Längen geformt werden, welche nach dem Formen zusammen das vollständige Profil des Schnittwerkzeuges schaffen, wobei dieses Formen gemäß den Instruktionen erfolgt und das Voreilen des Streifenmaterials durch eine Biegestation der Maschine, sein Biegen in dieser Station und ein Abschneiden der Längen einschließt, wobei aus den Daten umgewandelte Instruktionen ebenfalls einer Schneid- oder Fräsmaschine übermittelt werden, eine Stützplatte für das Schnittwerkzeug aus dem Blechmaterial unter Verwendung einer solchen Maschine in Übereinstimmung mit diesen Instruktionen geschnitten oder gefräst wird und wobei diese Längen des geformten Streifenmaterials um diese Stützplatte montiert werden, und diese Längen und die Stützplatte in der gewünschten Anordnung zusammen befestigt werden.

4. Verfahren nach Anspruch 3, dadurch gekennzeichnet, daß sogenannte Dorne in der Stützplatte angeordnet werden.

5. Verfahren nach einem der Ansprüche 3 bis 4, dadurch gekennzeichnet, daß die Daten in eine Vielzahl von Maschineninstruktionskanälen umgewandelt werden, wobei einer der Kanäle zur Biegemaschine und einer zu der Schnied- oder Fräsmaschine geführt werden.

6. Verfahren nach Anspruch 5, dadurch gekennzeichnet, daß ein weiterer der Kanäle zu einer Montagestation geführt wird, in welcher die Längen des geformten Materialstreifens und die Stützplatte zusammengebaut und befestigt werden.

**Revendications**

1. Appareil pour plier un matériau sous la forme d'une bande destinée à être utilisée dans la fabrication des emporte-pièce, comprenant un poste de pliage possédant une table de travail (50), des moyens (62) servant à faire avancer une bande de matériau pour l'amener audit poste de plaige, des moyens de guidage (32) servant à guider al bande ainsi avancée, lesdits moyens de guidage se terminant au poste de pliage par un bec (36) au-delà duquel fait saillie le matériau à plier et un outil de pliage (40) placé au niveau du poste de pliage et pouvant coopérere avec le bec (36) pour plier le matériau en bande qui en émerge, ledit outil de pliage (40) comprenant un doigt (40) qui est monté pour se déplacer dans une direction transversale aux moyens de guidage (32) et également en hauteur, entre une position de saillie, dans laquelle il fait saillie au-dessus de la surface de la table de travail (50) et une position rétractée, dans laquelle il ne fait pas saillie au-dessus de cette surface, de sorte que le doigt (40) peut être placé d'un côté ou de l'autre du matériau en bande qui émerge du bec (36) et qu'il peut êatre en outre placé contre ledit matériau en bande pour le plier autour d'un bord de pliage formé par le bec (36), appareil dans lequel la sortie du bec (36) délimite un point autour duquel se produit chaque incrément de pliage, l'agencement étant tel que le rayon d'une courbe formée dans la bande soit déterminé par la longueur d'avance longitudinale de la bande exécutée entre les opérations de pliage successives et par l'amplitude du mouvement transversal de l'outil de pliage dans ces opérations de pliage, et dans laquelle des moyens de commande à ordinateur (10—30) sont prévus pour commander les incréments du mouvement d'avance exécuté part les moyens d'avance (62), la position du doigt (40) par rapport au bec (36) avant qu'un pli ne soit fait, ainsi que l'amplitude et le sens du mouvement transversal du doigt de pliage (40) en fonction de données fournies aux moyens de commande (10—30) et en fonction de la forme selon laquelle le matériau en bande doit être plié.

2. Appareil selon la revendication 1, dans lequel le doigt de pliage (40) possède une tête élargie, l'agencement étant tel que, à l'endroit où le doigt (40) émerge au-dessus de la surface de la table de travail (50), une partie de bord de la tête élargie de ce doigt entre en contact avec la bande en un point situé à peu près à la moitié de la hauteur de cette bande.

3. Procédé de fabrication d'emporte-pièce, comprenant les phases consistant à: engendrer des données relatives au profil d'un flan de matériau en feuille qu'il s'agit de découper au moyen d'un emporte-pièce, à transfermer les données en instructions de machine, à fournir ces instructions à une machine plieuse, à fournir un matériau en en bande à la machine plieuse, à former à partir dudit matériau en bande ainsi fourni deux ou plus de deux longueurs, qui, ensemble, lorsqu'elles sont mises en forme, formeront le profil complet de l'emporte-pièce, cette mise en forme se produisant conformément auxdites instructions et comprenant les phases qui consistent à faire avancer le matériau en bande à travers un poste de pliage de ladite machine plieuse, à le plier dans ledit poste et à découper lesdites longueurs de cette bande, à fournir des instructions transformées à partir desdites données également à une machine de découpage ou de fraisage, à découper ou à fraiser une plaque support pour l'emporte-pièce à partir d'un matériau en feuille en utilisant une telle machine, conformément auxdites instructions, et à assembler lesdites longueurs du matériau en bande mis en forme autour de ladite plaque support et à fixer lesdites longueurs et ladite plaque support dans la configuration requise.

4. Procédé selon la revendication 3, comprenant également la phase consistant à monter ce qu'on appelle de pointeaux dans la plaque support.

5. Procédé selon l'une ou l'autre des revendications 3 et 4, dans lequel lesdites données sont converties en plusieurs canaux d'instructions de machine, un de ces canaux étant fourni à la machine plieuse et un à la machine de découpage ou de fraisage.

6. Procédé selon la revendication 5, dans lequel un autre desdits canaux est transmis à un poste d'assemblage dans lequel lesdites longueurs de matériau en bande mis en forme et ladite plaque support sont assemblées et fixées de la façon précitée.

0 088 576

**FIG.1**

```
Data extraction ─10
        │
        ▼
Data analysis and
interpretation ─12
        │
        ▼
Conversion to machine    14
increment instructions
        │
        ├──────────────────────────┐
        │                          │
Translate data for  26    Translate data for
assembly equipment        support plate
                     28 ─  manufacture
        │
        ▼
Control of bend
machine
(+ broaching)  ─16
        │
        ▼
Inspect resulting
18 ─ bend angles
                          30
                    Manufacture
                    support plate
                    (+ pricker holes)
        │
        ▼
Cut off and transfer ─20
        │
        ▼
Assemble + weld
(insert prickers) ─22
        │
        ▼
Mark ─24
```

1

FIG.2

FIG.3

FIG.4

0 088 576